# EUROPEAN PATENT SPECIFICATION

(11) **EP 3 253 001 B1**
(45) Date of publication and mention of the grant of the patent: **14.11.2018**
(21) Application number: 16177415.3
(22) Date of filing: 01.07.2016
(51) Int. Cl.: H04L 12/403, H04L 12/40, H04L 29/08, G06F 13/00

(54) **SYNCHRONIZED DATA TRANSMISSION FROM A DATA ACQUISITION SYSTEM TO A REAL TIME DIGITAL BUS**
SYNCHRONISIERTE DATENÜBERMITTLUNG AUS EINEM DATENERFASSUNGSSYSTEM AN EINEN ECHTZEIT-DIGITALBUS
TRANSMISSION DE DONNÉES SYNCHRONISÉE À PARTIR D'UN SYSTÈME D'ACQUISITION DE DONNÉES SUR UN BUS NUMÉRIQUE EN TEMPS RÉEL

(30) Priority: 02.06.2016 EP 16172671
(43) Date of publication of application: 06.12.2017
(73) Proprietor: Siemens Industry Software NV, 3001 Leuven (BE)
(72) Inventor: Wieten, Erik, 4814 TP Breda (NL); Verbruggen, Anton, 4731 WK Oudenbosch (NL)
(74) Representative: Maier, Daniel Oliver

(56) References cited:
- EP-A1- 2 214 034
- US-A1- 2014 351 359
- US-B1- 8 405 532

## Description

In systems, in particular in measurement systems (also called "data acquisition systems"), where measurement data is acquired to be used both for offline analysis and real-time control, the problem may occur that the timing requirements for the data production for both purposes don't match. Accordingly, there is a demand that the data acquisition should run concurrent with the real-time control through a digital bus. In particular in systems with multiple data sources like the described measurement systems every data source has to provide its data samples via the real time bus system precisely in time according to the timing schedule for the arrangement.

Although current measurement systems can provide data transmission at any desired time the data acquisition of the measurement system might not be synchronous to the transmission timing. That means, that the available data sample at the time the transmission is due might be actual or a bit outdated. Moreover, the delay between data acquisition and data transmission may vary, in particular in case that data acquisition rate and data transmission rate are not identical nor data acquisition rate is an integer multiple of the transmission rate. The problem is enlarged by the fact that the clocks of the real time data bus and the measurement system(s) typically are independent and may drift apart. Accordingly, the time at which the data sample is transmitted by the measurement system(s) might not be exactly the right time in respect of the real time data bus system.

The problem might be shortened by ad-hoc transmission of samples on request of the digital bus. The ad-hoc transmission method selects the nearest sample in the data acquisition system; nevertheless the time between the sample moment and the request from the digital bus will vary, resulting in amplitude errors.

Further it is possible to adjust the sampling frequency of the data acquisition system to an integer multiple of the update rate of the digital bus. Such adjustment of the sampling rate of the data acquisition system has a higher probability of picking the right samples, but that cannot be guaranteed. It would require the acquisition system to tune its sampling rate over the entire frequency range the digital system clock might drift over. This would deteriorate the quality of the measurement data produced by the acquisition system.

The problems might be partly solved by an asynchronous sample rate conversion by means of common up-sampling and down-sampling digital filters. Such asynchronous sample rate conversion can also smoothen the synchronization issues between the two clock worlds, but the "length" of such digital filters generates long latency.

The publication EP 2 214 034 A1 - Laine "Data acquisition apparatus and method" discloses data interpolation of a series of data for compensating frequency errors between en internal and an external clock of a data acquisition system. The document US 2014/0351359 A1 - Grocutt et al. "Data processing apparatus and method for communicating between a master device and an asynchronous slave device via an interface" shows for an arrangement with two entities (master, slave) the replication of the slave clock in the master system by exchange of synchronization messages.

The patent document US 8,405,532 B1 - Clark et al. "Asynchronous sample rate converter" discloses a method for sample rate conversion employing oversampling of the input data and finite impulse response filter for data interpolation.

Accordingly there is a need to shorten latency time and to provide correct sample values just in time for transmission.

This task can be solved by first synchronization of the two clock worlds (being the clock on the digital bus and the sampling clock of the data acquisition system) by creating a digital model of the digital system clock in the measurement system using a high precision numerically controlled oscillator (NCO), second prediction of the moment when the next sample has to be transmitted to the digital real time bus system, third interpolation or extrapolation of the data samples to create the exact sample amplitude associated with the (predicted) request of the digital bus, fourth transmission of the interpolated sample(s) to the digital real time bus system.

Accordingly, the solution comprises a method for transmitting a transmission data sample in a real time data bus system, wherein the transmission data sample is based on at least one acquired sample (or in most cases by a small number of acquired samples) acquired by a data acquisition system, and wherein the data acquisition system employs a first clock and the real time bus system timing is based on a second clock. The method comprises the steps of: first, synchronizing the first clock with the second clock, second, prediction of the time a next transmission data sample has to be transmitted by the real time data bus system, third, from at least two acquired samples, calculating of the transmission data sample for the predicted time by means of interpolation or extrapolation, and fourth, in-time transmitting of the calculated transmission data sample via the real time bus system. In particular in arrangements with multiple measurement systems connected to the real time bus data system this method can make sure that samples with the right content, e.g. amplitude information of a signal, are transmitted right in time.

The task is also solved by a measurement system which is set up for performing the previously described method steps in connection with a real time data bus system. Such system can achieve the advantages as described in connection with the method.

Advantageous embodiments are described in the dependent patent claims.

In a preferred embodiment, synchronizing the first clock with the second clock is performed by creating a model of the second clock (real time bus clock) in terms of the first clock (data acquisition system clock) using an NCO. The synchronization may employ a PLL (phase locked loop) method.

In particular, the method and the system provide elimination of time jitter and thereby improve the amplitude accuracy of the samples that are transmitted to / via the digital bus.

The method and the system take care for synchronization of the two clock worlds and accordingly guarantee that the right sample is transmitted at the very right time; accordingly there is no need for an integer relation between the two clock worlds; data acquisition still can run independently from the real-time control loop of the data bus system and connected applications (data sinks). The system and method reduce the latency and allow application of the data acquisition system in the real time control loop.

The synchronization of the two clock worlds guarantees that differences in clock frequency are compensated automatically. Therefore the system is insensitive to errors caused by temperature variations or aging.

The interpolation provides low-latency samples presented exactly at the right moment to the digital bus; there is no need to adjust the sampling frequency for the data acquisition system. Latency can further be reduced by means of extrapolation because in this case the target time of the sample to be calculated can be after the acquisition of the last real sample. The low and constant latency of the interpolation is essential for the stability of a real time control loop.

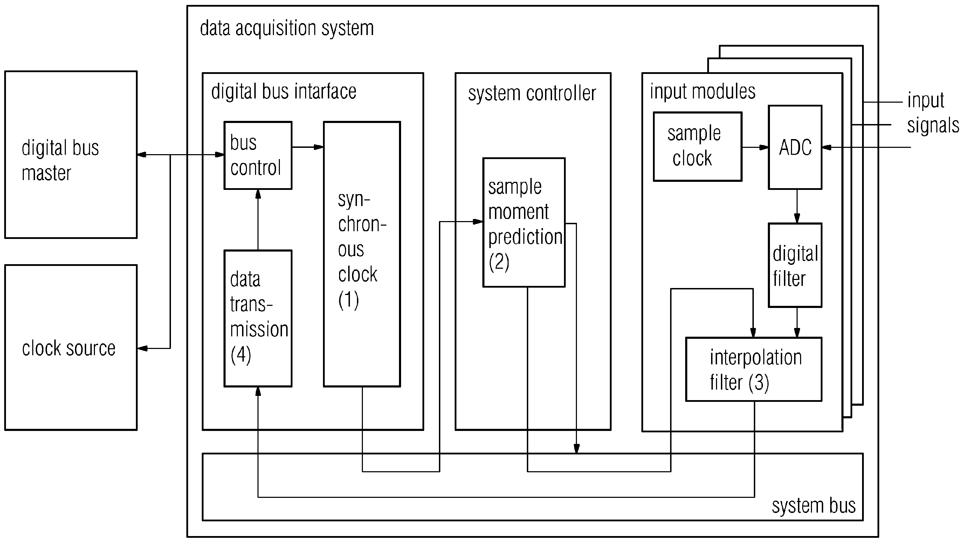

The figure shows a schematic diagram of a measurement system, with a data acquisition system with (analog) input signals, multiple input modules and all means to work from first (1) to fourth (4) step of the method as described before. The measurement system is connected to a real time bus system (not shown in detail) such as EtherCAT of manufacturer Beckhoff. For the bus system, a digital bus master and a clock source is shown. The bus system may connect to at least one other device (such as control systems, simulation systems, other measurement systems etc.) (not shown).

To make the data acquisition system connect to the bus system a Digital Bus Interface is provided, and several functional extensions are implemented on all systems and devices that will directly or indirectly interact with the digital bus. The digital bus interface comprises a bus control module, a data transmission module and a synchronous clock which is also referred to as "first clock".

The bus system shown on the left side of the figure contains an digital bus master which initiates all bus transfers. The bus master transmits data frames that pass through all connected bus slaves in a loop, back to the bus master. These frames are read out and modified on-the-fly as they pass through the slave devices, thus implementing a collision free, real-time data bus.

The bus protocol contains clock information of a second clock which allows all devices on the bus to reconstruct a sample clock. The data acquisition system is able to sample its input signals synchronously with this sample clock.

Since the data acquisition system shall be used in real-time control loops, the latency between signal input and data transmission module output should be minimized. The input modules consist, inter alia, of a sample clock module, an analog-digital-conversion (ADC) module, a digital filter and an interpolation filter. The input modules may provide configurable Bessel filters that allow the end user to implement some low latency anti-aliasing filtering on the input signals before the signals are sub-sampled synchronously with the digital bus clock (second clock). The transfer of the (e.g. 1 sample per channel) data transfer across the digital bus system should be initiated as soon as possible after the input modules have calculated an synchronous sample value for each of their inputs. For prediction of the transfer time, a system controller of the data acquisition system comprises a sample moment prediction unit. With this, a target time for interpolation filter is created.

To minimize the latency between the analog inputs of the data acquisition system and the samples the digital bus interface module eventually sends on the digital bus, the input modules should use rather fast ADC sample rates and support configurable anti-aliasing filtering using e.g. a 4-pole Bessel filter. After passing through this configurable filter the signal should be resampled synchronously with the digital bus system clock (second clock) or the synchronous clock (first) clock which has been aligned with the digital bus clock source.

The (optionally) Bessel-filtered input data should be resampled synchronously with the system bus clock. To make this possible, a NCO (numerical controlled oscillator) in the input module(s) provides a phase indication, multiple samples before the filtered output must be sent to the digital bus interface module.

The resample filter must implement a fractional group delay according to the phase data provided by the NCO (the delay consists of a fixed minimum delay plus a specified fraction). To meet the real-time requirements the fixed part of the group delay should be short. The resample filters need not suppress alias products above the resampled signal output bandwidth; if alias filtering is needed the Bessel filter stage should be used to provide this. Based on these observations e.g. a 3^{rd} order Lagrange interpolation filter is selected as resample filter. This can be implemented e.g. as a 4 tap FIR filter with a group delay of some (e.g. between 1 and 2) input samples (depending on the selected output phase). Rather than storing every possible 4 tap FIR the FIR is computed on-the-fly and then applied/reused for all input channels in the module.

Depending on timing constraints, as an alternative to the shown interpolation an extrapolation can be used, thus producing samples which are ahead to the acquired samples, given the constraint that the data is oversampled. Such extrapolation may reduce delay. However, extrapolating systems tend to be much less stable than interpolating systems/filters and thus additional computational effort has to be done for control.

The sample moments in other to the digital bus system coupled devices (e.g. data acquisition systems) are determined by the digital bus clock signal. This clock signal is input to the clock reconstruction logic implemented in the digital bus interface module(s) and partially in the system controller module (s) .

As described before, the digital bus clock (clock source; second clock system) is reproduced in all system components by NCOs. To make sure these NCOs remain in sync with the digital bus system clock input signal the digital bus interface module implements a control loop, e.g. employing a PID-controller and a PLL module.

It is advantageous to use 3^{rd} order Lagrange interpolation to produce the interpolated samples. I.e. the output samples are based on 4 acquisition system samples. This interpolation is computed by a FIR filter with 4 taps the coefficients of which are computed on-the-fly based on the target "phase" required for the output sample moment. Such a short filter may be sufficient because it can be assumed that the data is oversampled at this point since the sample rate of the acquisition system is much higher than the sample rate of the real time system. The third order interpolation adds between 1 and 2 acquisition sample durations to the processing delay. Because the acquisition sample rate is much higher than the real time system sample rate, this is in terms of the real time output sample rate a minimal delay. Typically within the acquisition system, the ADC converted samples are decimated to produce a lower sample rate in the recorded sample stream. This decimation takes place after the point where the data is (also) used to produce the real time bus data.

The real time system produces a fixed sample clock rate with some jitter on it because it is generated by e.g. an Ethernet bus controller device which does not run synchronously with this clock signal. This can be measured and averaged / tracked in a PLL configuration using an NCO with very high phase step resolution. This provides a "model" of the real time bus clock expressed in acquisition clock ticks. Since all components in the acquisition system run on the same clock, this clock can be distributed throughout the system to all places (I/O modules) where samples are produced and need to be resampled to the real time bus clock. Since the real time bus clock frequency is (reasonably) constant, the next clock edge can be predicted by simply adding the measured period to the last edge position. From this predicted edge time the time needed for sample computation and the time needed to transfer the sample from the input module to the real time bus interface can be subtracted. At this computed time the sample can be "produced" and be sent to the real time bus interface.

The clock signal provided by the digital bus interface is related to the time at which the bus provides the time slot in which the data is sent onto the bus by the bus control module. Thus, if the data is sent in time after the clock edge to the bus control module then they automatically "catch the bus" and get transported.

The shown arrangement embodies the solution strategy and design of components that enable the filtering and synchronous sub-sampling of input data. This includes measurement, tracking, and in-system distribution of the bus system clock (second clock), the implementation of the Bessel filters and the resample filters.

As a summary, the described method extends the use of the data acquisition system into real-time control applications, supporting real time control and data acquisition simultaneously; data acquisition application software can start and stop measurements without compromising the data quality and without disrupting data transfer to the real time control digital bus.

## Claims

1. A method for transmitting a transmission data sample in a real time data bus system,
wherein the transmission data sample is based on at least one acquired sample acquired by a data acquisition system, wherein the data acquisition system employs a first clock (synchronous clock) and the real time bus system timing is based on a second clock (clock source),
**characterized in, that**
the method comprises the steps of
- first, synchronizing the first clock (synchronous clock) with the second clock (clock source),
- second, prediction of the time a next transmission data sample has to be transmitted by the real time data bus system,
- third, from at least two acquired samples, calculating of the transmission data sample for the predicted time by means of interpolation or extrapolation, and
- fourth, in-time transmitting of the calculated transmission data sample via the real time data bus system.

2. The method of claim 1,
**characterized in,**
**that** as the first clock (synchronous clock) a digital model of the second clock (clock source) is maintained in the data acquisition system using a numerically controlled oscillator.

3. The method of claim 1 or 2,
**characterized in,**
**that** the first clock (synchronous clock) is synchronized with the second clock (clock source) by means of PLL and/or PID control.

4. The method of one of the preceding claims,
**characterized in,**
**that** the acquired samples are filtered by a Bessel filter.

5. The method of one of the preceding claims,
**characterized in,**
**that**, in the third step, the samples are resampled synchronously with the first clock (synchronous clock).

6. The method of claim 5,
**characterized in,**
**that** for resampling a Lagrange interpolator is used.

7. A data acquisition system for transmitting a transmission data sample in a real time data bus system,
wherein the transmission data sample is based on an acquired sample acquired by the data acquisition system,
wherein the data acquisition system employs a first clock (synchronous clock) and the real time bus system timing is based on a second clock (clock source),
**characterized in, that**
the data acquisition system is arranged for conducting the steps of:
- first, synchronizing the first clock (synchronous clock) with the second clock (clock source),
- second, prediction of the time a next transmission data sample has to be transmitted by the real time data bus system,
- third, from at least two acquired samples, calculating of the transmission data sample for the predicted time by means of interpolation or extrapolation, and
- fourth, in-time transmitting of the calculated transmission data sample via the real time data bus system.

8. The system of claim 7,
**characterized in,**
**that** as the first clock (synchronous clock) a digital model of the second clock (clock source) is foreseen in the data acquisition system using a numerically controlled oscillator.

9. The system of claim 7 or 8,
**characterized in**
a PLL and/or PID control for synchronizing the first clock (synchronous clock) with the second clock (clock source).

10. The system of one of the claims 7 to 9,
**characterized in**,
a Bessel filter for filtering the acquired samples.

11. The system of one of the claims 7 to 10,
**characterized in**
an interpolation filter for resampling the samples synchronously with the first clock (synchronous clock).

12. The system of claim 11,
**characterized in,**
**that** the resampling filter employs a Lagrange interpolator.

## Patentansprüche

1. Verfahren zum Übertragen einer Übertragungsdatenabtastung in einem Echtzeit-Datenbussystem,
wobei die Übertragungsdatenabtastung auf mindestens einer von einem Datenerfassungssystem erfassten Abtastprobe basiert, wobei das Datenerfassungssystem einen ersten Takt (synchroner Takt) nutzt und die Echtzeit-Bussystem-Zeitsteuerung auf einem zweiten Takt (Taktquelle) basiert,
**dadurch gekennzeichnet, dass**
das Verfahren ferner die Schritte umfasst:
- erstens, Synchronisieren des ersten Takts (synchroner Takt) mit dem zweiten Takt (Taktquelle),
- zweitens, Vorhersagen der Zeit, zu welcher eine nächste Übertragungsdatenabtastung von dem Echtzeit-Datenbussystem zu übertragen ist,
- drittens, Berechnen der Übertragungsdatenabtastung für die vorhergesagte Zeit mittels Interpolation oder Extrapolation anhand von mindestens zwei erfassten Abtastproben, und
- viertens, zeitabgestimmtes Übertragen der berechneten Übertragungsdatenabtastung über das Echtzeit-Datenbussystem.

2. Verfahren nach Anspruch 1,
**dadurch gekennzeichnet,**
**dass** in dem Datenerfassungssystem als der erste Takt (synchroner Takt) ein digitales Modell des zweiten Takts (Taktquelle) unter Verwendung eines numerisch gesteuerten Oszillators aufrechterhalten wird.

3. Verfahren nach Anspruch 1 oder 2,
**dadurch gekennzeichnet,**
**dass** der erste Takt (synchroner Takt) mit dem zweiten Takt (Taktquelle) mittels PLL- und/oder PID-Regelung synchronisiert wird.

4. Verfahren nach einem der vorhergehenden Ansprüche,
**dadurch gekennzeichnet,**
**dass** die erfassten Abtastproben von einem Bessel-Filter gefiltert werden.

5. Verfahren nach einem der vorhergehenden Ansprüche,
**dadurch gekennzeichnet,**
**dass** in dem dritten Schritt die Abtastproben synchron mit dem ersten Takt (synchroner Takt) neuabgetastet werden.

6. Verfahren nach Anspruch 5,
**dadurch gekennzeichnet,**
**dass** zum Neuabtasten ein Lagrange-Interpolator benutzt wird.

7. Datenerfassungssystem zum Übertragen einer Übertragungsdatenabtastung in einem Echtzeit-Datenbussystem, wobei die Übertragungsdatenabtastung auf mindestens einer von einem Datenerfassungssystem erfassten Abtastprobe basiert, wobei das Datenerfassungssystem einen ersten Takt (synchroner Takt) nutzt und die Echtzeit-Bussystem-Zeitsteuerung auf einem zweiten Takt (Taktquelle) basiert,
**dadurch gekennzeichnet, dass**
das Datenerfassungssystem dazu angeordnet ist, die Schritte durchzuführen:
- erstens, Synchronisieren des ersten Takts (synchroner Takt) mit dem zweiten Takt (Taktquelle),
- zweitens, Vorhersagen der Zeit, zu welcher eine nächste Übertragungsdatenabtastung von dem Echtzeit-Datenbussystem zu übertragen ist,
- drittens, Berechnen der Übertragungsdatenabtastung für die vorhergesagte Zeit mittels Interpolation oder Extrapolation anhand von mindestens zwei erfassten Abtastproben, und
- viertens, zeitabgestimmtes Übertragen der berechneten Übertragungsdatenabtastung über das Echtzeit-Datenbussystem.

8. System nach Anspruch 7,
**dadurch gekennzeichnet,**
**dass** in dem Datenerfassungssystem als der erste Takt (synchroner Takt) ein digitales Modell des zweiten Takts (Taktquelle) unter Verwendung eines numerisch gesteuerten Oszillators vorgesehen ist.

9. System nach Anspruch 7 oder 8,
**gekennzeichnet durch**
eine PLL- und/oder PID-Regelung zum Synchronisieren des ersten Takts (synchroner Takt) mit dem zweiten Takt (Taktquelle).

10. System nach einem der Ansprüche 7 bis 9,
**gekennzeichnet durch**
einen Bessel-Filter zum Filtern der erfassten Abtastproben.

11. System nach einem der Ansprüche 7 bis 10,
**gekennzeichnet durch**
einen Interpolationsfilter zum Neuabtasten der Abtastproben synchron mit dem ersten Takt (synchroner Takt).

12. System nach Anspruch 11,
**dadurch gekennzeichnet,**
**dass** der Neuabtastungs-Filter einen Lagrange-Interpolator benutzt.

## Revendications

1. Procédé pour transmettre un échantillon de données de transmission dans un système de données en temps réel,
dans lequel l'échantillon de données de transmission repose sur au moins un échantillon acquis par un système d'acquisition de données,
dans lequel le système d'acquisition de données emploie une première horloge (horloge synchrone) et le cadencement du système de bus en temps réel repose sur une deuxième horloge (source d'horloge),
**caractérisé en ce que**
le procédé comprend les stades de
- premièrement, synchronisation de la première horloge (horloge synchrone) à la deuxième horloge (source d'horloge),
- deuxièmement, prédiction du temps où un échantillon suivant de données de transmission doit être transmis par le système de bus de données en temps réel,
- troisièmement, à partir d'au moins deux échantillons acquis, calcul de l'échantillon de données de transmission pour le temps prédit, au moyen d'une interpolation ou d'une extrapolation et
- quatrièmement, transmission en cadence de l'échantillon de données de transmission calculé par le système de bus de données en temps réel.

2. Procédé suivant la revendication 1,
**caractérisé**
**en ce que**, comme première horloge (horloge synchrone), on maintient un modèle numérique de la deuxième horloge (source d'horloge) dans le système d'acquisition de données en utilisant un oscillateur à commande numérique.

3. Procédé suivant la revendication 1 ou 2,
**caractérisé**
**en ce que** la première horloge (horloge synchrone) est synchronisée à la deuxième horloge (source d'horloge) au moyen d'une commande PLL et/ou PID.

4. Procédé suivant l'une des revendications précédentes,
**caractérisé**
**en ce que** l'on filtre les échantillons acquis par un filtre de Bessel.

5. Procédé suivant l'une des revendications précédentes,
**caractérisé**
**en ce que**, dans le troisième stade, on rééchantillonne les échantillons en synchronisme avec la première horloge (horloge synchrone).

6. Procédé suivant la revendication 5,
**caractérisé**
**en ce que** pour rééchantillonner, on utilise un interpolateur de Lagrange.

7. Système d'acquisition de données pour transmettre un échantillon de données de transmission dans un système de bus de données en temps réel,
dans lequel l'échantillon de données de transmission repose sur un échantillon acquis par le système d'acquisition de données,
dans lequel le système d'acquisition de données emploie une première horloge (horloge synchrone) et le cadencement du système de bus en temps réel repose sur une deuxième horloge (source d'horloge),
**caractérisé en ce que**
le système d'acquisition de données est agencé pour effectuer les stades de :
- premièrement, synchronisation de la première horloge (horloge synchrone) à la deuxième horloge (source d'horloge),
- deuxièmement, prédiction du temps où un échantillon suivant de données de transmission doit être transmis par le système de bus de données en temps réel,
- troisièmement, à partir d'au moins deux échantillons acquis, calcul de l'échantillon de données de transmission pour le temps prédit, au moyen d'une interpolation ou d'une extrapolation et
- quatrièmement, transmission en cadence de l'échantillon de données de transmission calculé par le système de bus de données en temps réel.

8. Système suivant la revendication 7,
**caractérisé**
**en ce que**, comme premier horloge (horloge synchrone), un modèle numérique de la deuxième horloge (source d'horloge) est prévu dans le système d'acquisition de données en utilisant un oscillateur à commande numérique.

9. Système suivant la revendication 7 ou 8,
**caractérisé par**
une commande PLL et/ou PID pour synchroniser la première horloge (horloge synchrone) avec la deuxième horloge (source d'horloge).

10. Système suivant l'une des revendications 7 à 9,
**caractérisé par**
un filtre de Bessel pour filtrer les échantillons acquis.

11. Système suivant l'une des revendications 7 à 10,
**caractérisé par**
un filtre d'interpolation pour rééchantillonner les échantillons en synchronisme avec la première horloge (horloge synchrone).

12. Système suivant la revendication 11,
**caractérisé en ce que**
le filtre de rééchantillonnage emploie un interpolateur de Lagrange.
